# FASCICULE DE BREVET EUROPEEN

(11) **EP 1 790 214 B1**
(45) Date de publication et mention de la délivrance du brevet: **26.03.2008**
(21) Numéro de dépôt: 05292513.8
(22) Date de dépôt: 25.11.2005
(51) Int. Cl.: A01G 27/06

(54) **Contenant pour végétaux**
Pflanztopf
Plant Pot

(30) Priorité: 25.11.2005 FR 0412539
(43) Date de publication de la demande: 30.05.2007
(73) Titulaire: Société Industrielle d'Équipements Urbains SAS, 67230 Kogenheim (FR)
(72) Inventeur: Brière, Olivier, 74500 Evian les Bains (FR)
(74) Mandataire: Merckling, Norbert

(56) Documents cités:
- FR-A- 2 666 720
- FR-A- 2 724 813
- GB-A- 403 460
- US-A1- 2001 052 199

## Description

La présente invention se rapporte au domaine technique général des techniques de fleurissement et plus particulièrement au domaine des bacs et contenants pour végétaux.

De tels contenants sont connus en tant que tels et sont utilisés à des fins de fleurissement ou d'embellissement de zones urbaines ou privatives. Ainsi, lorsque par exemple une commune décide d'améliorer le fleurisse ment, elle a recours à de tels contenants, permettant de planter, de faire se développer, et de maintenir en vie divers végétaux ou fleurs.

On connaît des contenants pour végétaux comportant les caractéristiques du préambule de la revendication 1, voir FR-A-2666720

Un autre contenant pour végétaux est connu du document FR-A-2724813.

L'inconvénient lié à un embellissement végétal utilisant les contenants connus réside dans la nécessité de procéder à des arrosages fréquents, surtout en été.
Les arrosages fréquents sont en général entrepris par un personnel peu regardant sur les quantités d'eau apportées aux végétaux.Un autre inconvénient lié à l'utilisation de contenants connus se rapporte à un pourrissement relativement rapide des racines des végétaux, lié à une surabondance d'eau au niveau des racines et du substrat. Un tel phénomène peut se produire assez rapidement lors d'arrosages fréquents, lesquels peuvent être complétés d'un apport important d'eau de pluie notamment lors d'orages. Un problème similaire est rencontré lorsqu'un contenant comporte un compartiment de stockage d'eau ne permettant pas l'établissement d'un contact suffisant entre l'eau qui y est contenue et l'air ambiant, et lorsque le renouvellement de l'eau ne se fait pas de façon fréquente. Ceci peut engendrer des variation du pH de l'eau stockée dans le contenant, ne favorisant pas une croissance ou un développement optimal des végétaux.

Le but de la présente invention vise à s'affranchir des inconvénients précités tout en réduisant de façon significative les frais liés au temps passé pour procéder à un arrosage optimal des végétaux.

Un autre but de l'invention vise à réaliser des contenants avec peu d'éléments constitutifs, faciles à assembler tout en maintenant les coûts de fabrication, à un niveau réduit.

Ces problèmes et inconvénients sont résolus par un contenant selon la revendication 1. Des modes particuliers de réalisation de l'invention apparaissent dans les revendications dépendantes.

Il est ainsi possible de conserver un degré d'humidité optimal, favorisant la croissance et une durée de vie accrue des végétaux. En outre, l'absence d'une surabondance d'eau au niveau des racines rend les végétaux moins sensibles au gel.

Le ou les orifices ménagés dans la ou les parois montantes constitue(nt) des moyens d'aération du substrat. Ces derniers permettent d'une part de limiter la quantité d'eau dans le compartiment de stockage en évacuant le surplus d'eau par lesdits moyens d'aération et d'autre part d'éviter que les racines des végétaux ne baignent dans un milieu trop humide.

L'espace de circulation d'air sous le fond intermédiaire est constamment fonctionnel, et ce indépendamment de la quantité d'eau introduite dans le contenant. On obtient une circulation d'air sous le fond intermédiaire dont les trous permettent un drainage d'eau d'une part et une diffusion d'air frais dans le substrat d'autre part.

Les moyens d'aération permettent d'évacuer l'eau de pluie pénétrant dans le contenant et dont la quantité, souvent importante, nuit au bon développement des végétaux.

Les moyens d'aération s'étendent à une distance du fond, inférieure au tiers de la hauteur de la paroi périphérique montante ou des parois montantes. Il est possible de disposer les moyens d'aération à un niveau de hauteur optimal correspondant, en fonction des dimensions du contenant, à une quantité maximale d'eau dans le compartiment de stockage. Cette réserve d'eau peut ainsi progressivement diffuser à travers le substrat. Compte tenu d'une diffusion lente et progressive de l'eau, on obtient une faible consommation pouvant conduire à une fréquence d'arrosage d'une fois toutes les trois ou quatre semaines. La gestion du fleurissement est ainsi fortement simplifiée et les frais de personnels s'y rapportant sont réduits.

Le substrat et les racines des végétaux sont séparés du compartiment de stockage d'eau lequel peut également contenir des engrais ou autres produits nutritifs ou phytosanitaires. Cette séparation permet en outre de ne pas altérer le pH de l'eau stockée. Une telle conception est d'une part particulièrement efficace pour la croissance et la durée de vie des végétaux et d'autre part extrêmement simple à réaliser sur le plan technique.

Les éléments du contenant conforme à l'invention peuvent par exemple être démontables de façon à procéder à des opérations de nettoyage lorsque les végétaux sont remplacés. Le contenant conforme à l'invention est par exemple constitué de deux éléments, à savoir l'enveloppe extérieure du contenant et le fond intermédiaire.Ce dernier est par exemple une tôle perforée, laquelle délimite le niveau supérieur de l'espace de circulation d'air et constitue le support pour le substrat. Selon un autre mode de réalisation conforme à l'invention, le fond intermédiaire est par exemple une grille métallique, fabriquée par tous moyens connus.

Le fond intermédiaire repose sur le fond par exemple grâce à au moins un pied perforé. A titre d'exemple, le fond intermédiaire est associé à plusieurs pieds perforés, dont le nombre dépend de la dimension dudit fond intermédiaire et/ou de la quantité de substrat à supporter.

Le pied perforé est creux et rapporté sous le fond intermédiaire de manière à déboucher avec sa partie creuse sur une ouverture prévue dans ledit fond intermédiaire. Les dimensions de l'ouverture sont choisies pour laisser pénétrer du substrat dans la partie creuse du pied perforé, jusqu'au fond. C'est ainsi le substrat, s'engageant dans la partie creuse du pied perforé, qui constitue les moyens de diffusion d'eau, faisant remonter l'eau par capillarité dans le restant du substrat de l'espace intérieur.

Le ou chaque pied perforé, par exemple constitué d'une tôle perforée est assemblé avec le fond intermédiaire par des points de soudure ou par une fixation du type clipsage ou autre. La tôle perforée constitutive du pied perforé est pliée de manière à présenter par exemple une section transversale rectangulaire.

Selon une exemple de réalisation conforme à l'invention, le contenant comporte une purge disposée sur la paroi périphérique montante ou sur l'une des parois montantes, au voisinage du fond. Cette purge permet d'évacuer l'eau stagnant dans le compartiment de stockage lorsque l'utilisateur estime qu'il est nécessaire de la changer et de la remplacer avec de l'eau fraîche ou avec un autre produit nutritif liquide. Le contenant conforme à l'invention peut comporter à cet effet un organe de remplissage d'eau débouchant dans le compartiment de stockage d'eau.

La paroi périphérique montante ou chaque paroi montante est pourvue d'une pluralité d'orifices. Lorsque le contenant présente une forme de section transversale rectangulaire, un ou plusieurs orifices sont par exemple ménagés au travers d'au moins deux parois opposées.

Selon un exemple de réalisation, les orifices ménagés dans une paroi périphérique montante cylindrique ou tronconique de façon diamétralement opposée.

Le contenant conforme à l'invention peut à titre d'exemple présenter une forme adaptée pour réaliser une toiture végétalisée.

Par contenant, il convient également d'entendre toute structure végétalisée de conception, de forme et d'applications diverses et variées, permettant notamment de réaliser des cultures hors sols.

Selon un autre exemple de réalisation du contenant conforme à l'invention, le fond intermédiaire repose sur une nervure interne prévue sur la paroi périphérique montante ou sur au moins deux parois montantes opposées. Les moyens de diffusion d'eau sont dans ce cas constitués de mèches traversant le fond intermédiaire et s'étendant du fond jusque dans l'espace intérieur destiné à être rempli par le substrat.

D'autres caractéristiques et avantages ressortiront également de la description détaillée, donnée ci-après en référence aux dessins non limitatifs, dans lesquels :
- la figure 1 est une représentation schématique éclatée d'un exemple de réalisation d'un contenant conforme à l'invention, à deux éléments constitutifs;
- la figure 2 est une vue en perspective partiellement découpée d'un autre exemple de réalisation d'un contenant conforme invention ;
- les figures 3 et 4 représentent schématiquement respectivement en vue de dessus et en vue de face un exemple de réalisation d'un contenant conforme à l'invention ;
- la figure 5 représente schématiquement un autre mode de réalisation d'un contenant conforme à l'invention, comportant des mèches de diffusion d'eau ;
- la figure 6 représente schématiquement une variante de réalisation du contenant de la figure 5, lequel comporte un organe de remplissage latéral extérieur.

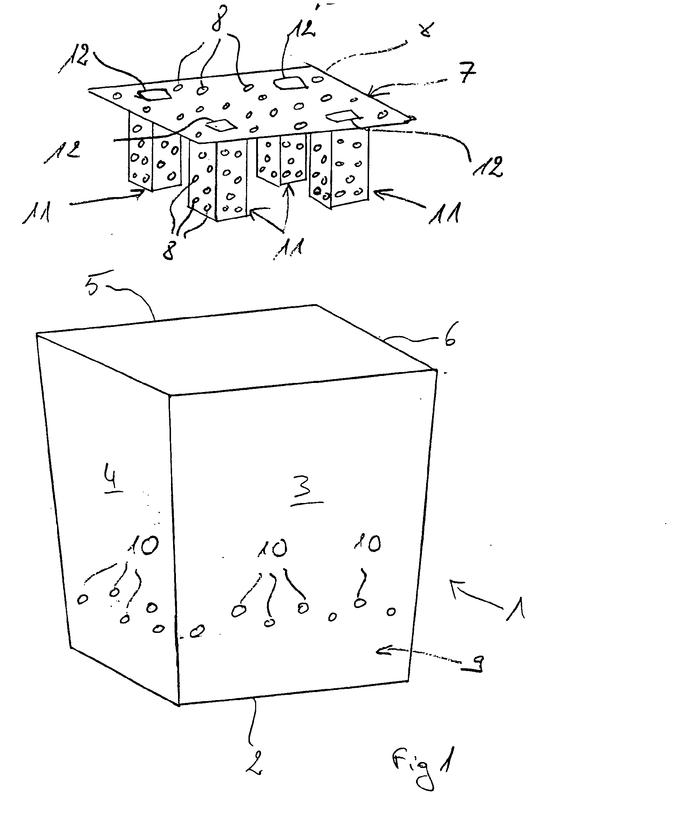

Un exemple de contenant (1) pour végétaux est représenté en perspective à la figure 1. Le contenant (1) présente un fond (2) et au moins une paroi périphérique montante (3) à partir du fond (2) délimitant un espace intérieur, lequel est destiné à contenir un substrat favorisant le développement des végétaux. Le substrat est par exemple constitué de billes d'argile, de terre ou d'un autre matériau inerte et à forte capillarité.

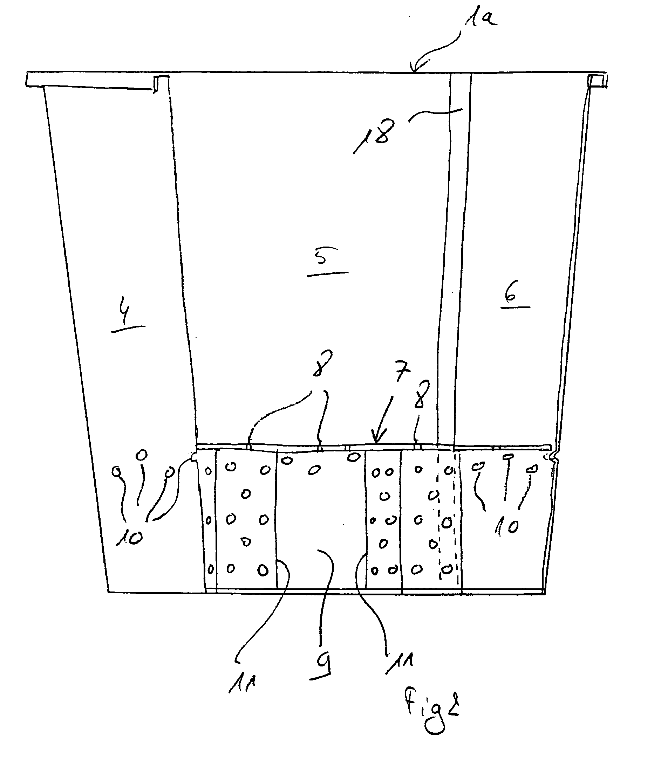

Dans l'exemple représenté à la figure 1 ou à la figure 2, le contenant (1) présente quatre parois montantes (3, 4, 5 et 6) délimitant l'espace intérieur destiné à être rempli au moins partiellement avec un substrat. A titre de variante, il est concevable de prévoir une paroi périphérique montante (3) présentant une forme cylindrique ou tronconique en partant du fond (2). Le fond (2) ainsi que la paroi périphérique montante (3) ou les parois montantes(3 à 6) sont par exemple réalisés avec un matériau type plastique, béton, briques en polyéthylène ou autres matériaux composites.

Le contenant (1) comporte des moyens d'aération pour générer une circulation d'air à l'intérieur dudit contenant (1) et pour diffuser au moins en partie l'air en circulation dans le substrat.

Les moyens d'aération sont par exemple localisés au voisinage du fond (2) et s'étendent de préférence à une distance du fond (2) inférieure au tiers de la hauteur de la paroi périphérique montante (3) ou des parois montantes (3 à 6). Le positionnement des moyens d'aération dépend des dimensions du contenant (1). Ce positionnement dépend également de la nature du substrat et permet d'optimiser la diffusion d'air dans le substrat.

Les moyens d'aération s'étendent également selon un plan d'extension sensiblement parallèle au fond (2). Différentes réalisations des moyens d'aération sont envisageables.

Le contenant (1) représenté en éclaté à la figure 1, comporte à partir du fond (2) quatre parois montantes (3, 4, 5, 6) délimitant avec ledit fond (2) un espace intérieur. Ce dernier de forme sensiblement parallélépipédique est destiné à être rempli en partie par un substrat favorisant le développement des végétaux. Ce substrat est par exemple constitué de billes d'argile connues en tant que telles.

Le contenant (1) comporte également un fond intermédiaire (7) s'étendant sensiblement horizontalement et à distance du fond (2) dans l'espace intérieur. Le fond intermédiaire (7) est pourvu de trous (8) dont les dimensions sont choisies pour drainer l'eau tout en retenant le substrat. Le fond intermédiaire (7) est par exemple une tôle perforée. Le fond intermédiaire (7) est par exemple constitué d'une grille selon un autre mode de réalisation.

Le contenant (1) comporte également un compartiment de stockage d'eau (9) en partie basse ainsi que des moyens de diffusion d'eau faisant remonter l'eau par capillarité dans le substrat à partir du compartiment de stockage d'eau (9).

Le contenant (1) présente en outre au moins un orifice (10) ménagé dans la paroi périphérique montante (3) ou dans au moins l'une des parois montantes (3, 4, 5, 6). L'orifice (10) est localisé à distance du fond (2) et en deçà de la position du fond intermédiaire (7), lorsque ce dernier est disposé dans l'espace intérieur. L'orifice (10) et le fond intermédiaire (7) délimitent ainsi de façon constante un espace de circulation d'air sous le fond intermédiaire (7). Cet espace de circulation d'air est conservé quelle que soit la quantité d'eau introduite dans le contenant (1).

L'exemple de réalisation de la figure 1 montre quatre parois montantes (3 ,4, 5, ou 6) comportant chacune une pluralité d'orifices (10). Dans l'exemple représenté, les orifices (10) s'étendent sur chaque paroi montante (3, 4, 5, 6) sur deux niveaux décalés en hauteur. Lorsque le fond intermédiaire (7) est dans sa position fonctionnelle dans l'espace intérieur, il s'étend au-dessus du niveau de localisation supérieur des orifices (10). La pluralité d'orifices (10) permet de réaliser des moyens d'aération et de ventilation particulièrement efficaces sous le fond intermédiaire (7). La circulation d'air, générée ainsi sous le fond intermédiaire (7) n'est jamais interrompue, même en cas d'apport d'eau excessif. Cette circulation d'air agit favorablement sur le substrat d'une part et sur l'eau dans le compartiment de stockage (9) d'autre part. L'eau peut dont être conservée plus longtemps dans le réservoir de stockage et son pH ne risque pas d'être altéré. En outre, le niveau maximum d'eau dans le compartiment de stockage (9) est délimité par les orifices (10) du niveau de localisation inférieur, en particulier par les extrémités basses desdits orifices (10), par lesquels le surplus d'eau est évacué vers l'extérieur du contenant (1).

Le fond intermédiaire (7) repose sur le fond (2) par l'intermédiaire d'au moins un pied perforé (11). La dimension et notamment la hauteur du pied perforé (11) définit le niveau de positionnement du fond intermédiaire (7) dans l'espace intérieur du contenant (1).

Dans l'exemple de réalisation de la figure 1, le fond intermédiaire (7) est associé à quatre pieds perforés (11). Ces derniers sont par exemple conformés avec une tôle perforée. Cette dernière est par exemple identique à celle constitutive du fond intermédiaire (7). La tôle perforée servant à réaliser les pieds perforés (11), par exemple par une opération de pliage, est également pourvue de trous (8).

Le nombre de pieds perforés (11) peut être adapté à la dimension du fond intermédiaire (7) et en particulier au poids du substrat destiné à remplir l'espace intérieur du contenant (1). Le pied perforé (11) ou chaque pied perforé (11) est assemblé avec le fond intermédiaire (7) par des points de soudure ou par une fixation du type clipsage ou par tout autre moyen de fixation connu.

Le pied perforé (11) ou chaque pied perforé (11) est creux et rapporté sous le fond intermédiaire (7) de manière à déboucher avec sa partie creuse sur une ouverture (12) ménagée dans le fond intermédiaire (7). Les dimensions de l'ouverture (12) sont choisies pour laisser pénétrer le substrat dans la partie creuse du pied perforé (11) jusqu'au fond (2). Le substrat s'étend alors en continuité de l'espace intérieur au-dessus du fond intermédiaire (7) jusqu'au fond (2) grâce à la partie creuse du pied perforé (11). La partie creuse du pied perforé (11) et le substrat s'y trouvant constituent ainsi les moyens de diffusion d'eau pour faire remonter l'eau par capillarité au-dessus du fond intermédiaire (7) à partir du compartiment de stockage (9) dans lequel s'étendent les pieds perforés (11).

Dans un tel exemple de réalisation, il s'avère inutile de prévoir des moyens de diffusion complémentaires assurant la diffusion d'eau par capillarité dans le substrat.

Dans l'exemple de réalisation de la figure 2, le fond intermédiaire (7) est associé à deux pieds perforés (11).

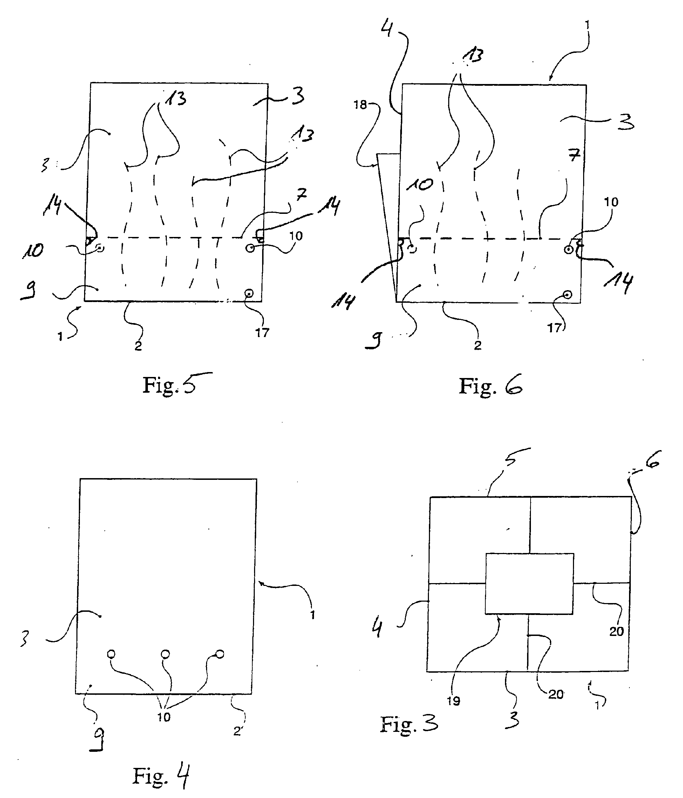

Suivant un autre mode de réalisation du contenant (1) conforme à l'invention et représenté schématiquement aux figures 4 à 6, le fond intermédiaire (7) traversé par des mèches (13), repose sur une nervure interne (14) de la paroi périphérique montante (3) ou sur au moins deux parois montantes opposées (3,5) ou (4, 6). Les mèches (13) s'étendent du fond (2) jusque dans l'espace intérieur destiné à être rempli par le substrat. Ces mèches (13) constituent les moyens de diffusion d'eau par capillarité dans le substrat. Alternativement, les nervures internes (14) peuvent être remplacées par un rétrécissement de l'enveloppe externe du contenant (1). Ce rétrécissement, par exemple une forme tronconique, permet au fond intermédiaire (7) de reposer directement sur la face interne de la paroi périphérique montante (3) ou sur deux faces internes de deux parois montantes opposées (3, 5) ou (4, 6). Les dimensions de fond intermédiaire (7) sont alors choisies pour positionner ce dernier à une hauteur optimale.

L'espace de circulation d'air est délimité d'une part par le fond intermédiaire (7) et d'autre part par les orifices (10). La position des orifices (10) permet également de définir le niveau maximal de remplissage du compartiment de stockage d'eau (9). Le nombre d'orifices (10) est adapté aux dimensions du contenant (1).

Les orifices (10) permettent de remplir, dans tous les exemples de réalisation, une fonction de trop-plein en cas de surabondance d'eau dans le contenant (1).

Le contenant (1) comporte par exemple une purge (17) connue en tant que telle et représentée aux figures 5 et 6. La purge (7) est disposée sur la paroi montante (4) ou sur l'une des parois montantes (3 à 6) au voisinage du fond (2) et permet d'évacuer l'eau contenue dans le contenant à des fins de renouvellement, notamment dans le cas d'une acidité trop importante.

Selon un exemple de réalisation du contenant (1) conforme à l'invention, ce dernier comporte un organe de remplissage d'eau (18) débouchant dans la partie basse du contenant (1). On pourra par exemple se reporter à la figure 2, montrant l'organe de remplissage (18) disposé latéralement sur la face externe de la paroi montante (4).

Selon un autre mode de réalisation représenté par exemple à la figure 2, l'organe de remplissage s'étend sous forme de conduit dans l'espace intérieur, le long de la jonction des parois montantes (5) et (6). L'organe de remplissage (18) présente une extrémité supérieure affleurant avec le bord supérieur (1a) du contenant (1).

Selon un exemple de réalisation représenté à la figure (3), le contenant (1) comporte un panier central (19) disposé dans le volume interne du contenant (1) et destiné à recevoir une motte de terre contenant les racines des végétaux. Ce panier central (19) est par exemple une cage ouverte, formée à partir d'une grille, permettant la croissance des racines des végétaux et à leur extension dans le substrat entourant ledit panier central (19). Ce dernier est par exemple fixé ou supporté par les ou la paroi périphériques du contenant (1) à l'aide de bras support (20), avant l'opération consistant à remplir l'espace intérieur par le substrat, lequel vient entourer le panier central (19).

## Revendications

1. Contenant (1) pour végétaux comportant :
- un fond (2),
- au moins une paroi périphérique montante (3), délimitant avec le fond (2) un espace intérieur, lequel est en partie rempli par un substrat favorisant le développement des végétaux,
- un fond intermédiaire (7) s'étendant sensiblement horizontalement et à distance du fond (2) dans l'espace intérieur, ledit fond intermédiaire (7) étant pourvu de trous (8) dont les dimensions sont choisies pour drainer l'eau tout en retenant le substrat,
- un compartiment de stockage d'eau (9) en partie basse, et
- des moyens de diffusion d'eau faisant remonter l'eau par capillarité dans le substrat à partir du compartiment de stockage (9),
- au moins un orifice (10) ménagé dans la paroi périphérique montante (3) ou dans au moins une des parois montantes (3, 4, 5, 6), l'orifice (10) étant localisé à distance du fond (2) et en deçà de la position du fond intermédiaire (7), délimitant de façon constante un espace de circulation d'air sous le fond intermédiaire, **caractérisé en ce que** le fond intermédiaire (7) repose sur le fond (2) par l'intermédiaire d'au moins un pied perforé (11), ledit pied étant creux et rapporté sous le fond intermédiaire (7) de manière à déboucher avec sa partie creuse sur une ouverture (12) prévue dans ledit fond intermédiaire (7), les dimensions de l'ouverture (12) étant choisies pour laisser pénétrer du substrat dans la partie creuse du pied, jusqu'au fond (2).

2. Contenant (1) selon la revendication 1, **caractérisé en ce que** le fond intermédiaire (7) est une tôle perforée.

3. Contenant (1) selon la revendication 1 ou 2, **caractérisé en ce qu**'au moins le pied perforé (11) est conformé avec une tôle perforée.

4. Contenant (1) selon l'une quelconque des revendications 1 à 3, **caractérisé en ce que** le fond intermédiaire (7) est associé à plusieurs pieds perforés (11).

5. Contenant (1) selon l'une quelconque des revendications 1 à 4, **caractérisé en ce que** le ou chaque pied perforé (11) est assemblé avec le fond intermédiaire (7) par des points de soudure ou par une fixation du type clipsage.

6. Contenant (1) selon l'une quelconque des revendications 1 à 5, **caractérisé en ce que** la paroi périphérique montante (3) ou chaque paroi montante (3, 4, 5, 6) comporte une pluralité d'orifices (10).

7. Contenant (1) selon l'une quelconque des revendications 1 à 6, **caractérisé en ce qu**'il comporte un organe de remplissage (18) débouchant dans le compartiment de stockage d'eau (9).

8. Contenant (1) selon l'une quelconque des revendications 1 à 7, **caractérisé en ce qu**'il comporte une purge (17) disposée sur la ou sur une paroi montante (3, 4, 5, 6), au voisinage du fond (2).

## Claims

1. Container (1) for plants comprising:
- a bottom (2),
- at least one rising peripheral wall (3), delimiting with the bottom (2) an inner space, which is partly filled with a substrate that promotes plant growth,
- an intermediate bottom (7) extending substantially horizontally and at a distance from the bottom (2) in the inner space, said intermediate bottom (7) being provided with holes (8) the dimensions of which are selected so as to drain the water while retaining the substrate,
- a water storage compartment (9) in the lower part, and
- means for distributing water making the water rise by capillarity in the substrate from the storage compartment (9),
- at least one orifice (10) provided in the rising peripheral wall (3) or in at least one of the rising walls (3, 4, 5, 6), the orifice (10) being located at a distance from the bottom (2) and below the position of the intermediate bottom (7), consistently delimiting an air circulation space under the intermediate bottom, **characterised in that** the intermediate bottom (7) rests on the bottom (2) by means of at least one perforated foot (11), said foot being hollow and added under the intermediate bottom (7) so as to emerge with its hollow part at an opening (12) provided in said intermediate bottom (7), the dimensions of the opening (12) being selected to allow substrate to penetrate into the hollow part of the foot, as far as the bottom (2).

2. Container (1) according to claim 1, **characterised in that** the intermediate bottom (7) is a perforated plate.

3. Container (1) according to claim 1 or 2, **characterised in that** at least the perforated foot (11) is matched with a perforated plate.

4. Container (1) according to any one of claims 1 to 3, **characterised in that** the intermediate bottom (7) is associated with several perforated feet (11).

5. Container (1) according to any one of claims 1 to 4, **characterised in that** the or each perforated foot (11) is coupled with the intermediate bottom (7) via weld spots or by a snap-on fastening.

6. Container (1) according to any one of claims 1 to 5, **characterised in that** the rising peripheral wall (3) or each rising wall (3, 4, 5, 6) comprises a plurality of orifices (10).

7. Container (1) according to any one of claims 1 to 6, **characterised in that** it comprises a filling component (18) emerging in the water storage compartment (9).

8. Container (1) according to any one of claims 1 to 7, **characterised in that** it comprises a drain point (17) arranged on the or on a rising wall (3, 4, 5, 6), in the vicinity of the bottom (2).

## Patentansprüche

1. Behälter (1) für Pflanzen, Folgendes aufweisend:
- einen Boden (2),
- mindestens eine periphere aufsteigende Wand (3), die mit dem Boden (2) einen Innenraum abgrenzt, der zum Teil mit einem Substrat gefüllt, ist, das die Entwicklung der Pflanzen begünstigt,
- einen Zwischenboden (7), der sich im Wesentlichen horizontal und von dem Boden (2) entfernt im Innenraum erstreckt, wobei der Zwischenboden (7) mit Löchern (8) versehen ist, deren Maße ausgewählt sind, um das Wasser abzuleiten und gleichzeitig das Substrat zurückzuhalten,
- ein Wasserspeicherfach (9) im unteren Teil, und
- Mittel zum Verteilen von Wasser, die das Wasser durch Kapillarwirkung ausgehend von dem Speicherfach (9) in das Substrat aufsteigen lassen,
- mindestens eine Öffnung (10), die in der peripheren aufsteigenden Wand (3) oder in mindestens einer der aufsteigenden Wände (3, 4, 5, 6) eingerichtet ist, wobei die Öffnung (10) in einer Entfernung von dem Boden (2) und unter der Position des Zwischenbodens (7) liegt, um konstant einen Luftzirkulationsraum unter dem Zwischenboden abzugrenzen, **dadurch gekennzeichnet, dass** der Zwischenboden (7) auf dem Boden (2) über mindestens einen perforierten Fuß (11) ruht, wobei der Fuß hohl und unter dem Zwischenboden (7) angebaut ist, so dass er mit seinem hohlen Teil auf einer Öffnung (12) mündet, die in dem Zwischenboden (7) vorgesehen ist, wobei die Maße der Öffnung (12) ausgewählt sind, um Substrat in den hohlen Teil des Fußes bis zum Boden (2) eindringen zu lassen.

2. Behälter (1) nach Anspruch 1, **dadurch gekennzeichnet, dass** der Zwischenboden (7) ein Lochblech ist.

3. Behälter (1) nach Anspruch 1 oder 2, **dadurch gekennzeichnet, dass** zumindest der perforierte Fuß (11) mit einem Lochblech ausgebildet ist.

4. Behälter nach (1) einem der Ansprüche 1 bis 3, **dadurch gekennzeichnet, dass** der Zwischenboden (7) mit mehreren perforierten Füßen (11) verbunden ist.

5. Behälter (1) nach einem der Ansprüche 1 bis 4, **dadurch gekennzeichnet, dass** der oder jeder perforierte Fuß (11) mit dem Zwischenboden (7) durch Schweißstellen oder Befestigungen des Typs Clips zusammengebaut ist.

6. Behälter (1) nach einem der Ansprüche 1 bis 5, **dadurch gekennzeichnet, dass** die periphere aufsteigende Wand (3) oder jede aufsteigende Wand (3, 4, 5, 6) mehrere Öffnungen (10) aufweist.

7. Behälter (1) nach einem der Ansprüche 1 bis 6, **dadurch gekennzeichnet, dass** er ein Füllorgan (18) aufweist, das in das Wasserspeicherfach (9) mündet.

8. Behälter (1) nach einem der Ansprüche 1 bis 7, **dadurch gekennzeichnet, dass** er eine Entlüftung (17) aufweist, die auf der oder einer aufsteigenden Wand (3, 4, 5, 6) in der Nähe des Bodens (2) angeordnet ist.
